# EUROPÄISCHE PATENTSCHRIFT

(11) **EP 4 004 079 B1**
(45) Veröffentlichungstag und Bekanntmachung des Hinweises auf die Patenterteilung: **25.06.2025**
(21) Anmeldenummer: 20742205.6
(22) Anmeldetag: 13.07.2020
(51) Int. Cl.: C08G 18/32, C08G 18/38, C08G 18/48, C08G 18/66, C08G 18/76

(54) **HERSTELLUNG VON POLYURETHANSCHÄUMEN**
PREPARATION OF POLYURETHANE FOAMS
FABRICATION DES MOUSSES POLYURÉTHANES

(30) Priorität: 24.07.2019 US 201962877904 P
(43) Veröffentlichungstag der Anmeldung: 01.06.2022
(73) Patentinhaber: Evonik Operations GmbH, 45128 Essen (DE)
(72) Erfinder: EMMRICH-SMOLCZYK, Eva, 45133 Essen (DE); VIDAKOVIC, Mladen, 47269 Duisburg (DE); WENDEL, Stephan, 23758 Oldenburg (DE); BURDENIUC, Juan Jesus, Colmar, Pennsylvania 18915 (US)
(74) Vertreter: Evonik Patent Association
(86) Internationale Anmeldenummer: PCT/EP2020/069739
(87) Internationale Veröffentlichungsnummer: WO 2021/013607

(56) Entgegenhaltungen:
- WO-A1-03/018660
- WO-A2-01/23451
- DE-A1- 102009 047 846

## Beschreibung

Die Erfindung liegt auf dem Gebiet der Polyurethane und betrifft insbesondere ein Verfahren zur Herstellung von Polyurethan-Schäumen durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart einer Komponente A, umfassend ein Polyhydrazid, ein Polysulfonylhydrazid und/oder -carbodihydrazid, insbesondere ein Polyhydrazid, durchgeführt wird, sowie entsprechend hergestellten Polyurethan-Schäumen. Polyurethansysteme im Sinne dieser Erfindung sind .

### Polyurethanschäume/-schaumstoffe.

Polyurethane finden aufgrund ihrer hervorragenden mechanischen und physikalischen Eigenschaften in den verschiedensten Bereichen Verwendung. Einen besonders wichtigen Markt für verschiedenste Typen von Polyurethanen stellt der Bereich der Schäume dar, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen mit flammlaminierten Bezugsstoffen sowie für ausgestanzte Sonnenblenden, Kalt- und Weichschäume für Sitzsysteme und Instrumententafeln, sowie Matratzen verwendet. Aber auch Klebstoffe und Beschichtungen sind ein Einsatzbereich für Polyurethane, in dem diese durch herausragende Eigenschaften überzeugen.

Problematisch bei der Herstellung und Lagerung von Polyurethanschäumen ist die Freisetzung von Aldehyden. Viele Verbraucher wollen wegen gesundheitlicher Bedenken aldehyd-emittierende Produkte nach Möglichkeit nicht mehr verwenden, unabhängig davon, ob gesundheitliche Bedenken tatsächlich gerechtfertigt sind.

Außerdem haben in der letzten Zeit vor allem die chinesischen Behörden die Anforderungen erhöht und verlangen z. B. sehr strenge Grenzwerte für Innenraumemissionen für in China verkaufte Autos. Besonderer Fokus liegt hier, neben aromatischen Kohlenwasserstoffen, wiederum auf den Aldehyden. Es besteht somit ganz allgemein der Wunsch nach solchen Polyurethanschäumen, welche so wenige Aldehyde wie möglich freisetzen.

Um diesem Wunsch zu entsprechen, gab es bereits unterschiedliche Ansätze. So geht die WO 2009/117479 davon aus, dass der Formaldehyd aus dem Rohstoff stammt und insbesondere in den eingesetzten Amin-Katalysatoren (tertiären Aminen) enthalten sein soll. Diese Schrift schlägt zum Erreichen niedriger Formaldehyd-Emissionen deshalb vor, dem tertiären Amin-Katalysator ein primäres Amin zuzugeben. Vorzugsweise wird Dimethylaminopropylamin eingesetzt.

DE 10003156 A1 beschäftigt sich nicht unmittelbar mit emissionsarmen Schaumstoffen, sondern damit, Polymere mit hervorragenden Adsorptionsfähigkeiten für verschiedene Verbindungen, insbesondere für Schwermetallionen zu entwickeln. Zur Lösung dieser Aufgabe werden dann Polyurethanschaumstoffe vorgeschlagen, die Ethylenimin, Polyethylenimin, Polyvinylamin, carboxymethylierte Polyethylenimine, phosphonomethylierte Polyethylenimine, quarternisierte Polyethylenimine und/oder dithiocarbamitisierte Polyethylenimine enthalten. Diese Schaumstoffe können auch zur Adsorption organischer Substanzen wie z.B. Formaldehyd eingesetzt werden.

DE 10258046 A1 beschäftigt sich mit der Aufgabe, Polyurethanschaumstoffe herzustellen, die einen reduzierten Gehalt an Formaldehydemission aufweisen. Im Unterschied zu DE 10003156 A1 liegt die Aufgabe der DE 10258046 A1 also in der Reduzierung der Formaldehydemissionen aus dem PUR-Schaumstoff als solchen, und nicht in der Adsorption von Formaldehyd aus der Umgebungsluft. Zur Lösung dieser Aufgabe wird dann ein Verfahren vorgeschlagen, das die Zugabe von Aminogruppen aufweisenden Polymeren zu dem Polyurethanschaumstoff vorsieht, wobei die Zugabe vor und/oder bei der Herstellung des Polyurethanschaumstoffs erfolgen kann.

In der EP 3459983 A1 wurde allerdings festgestellt, dass je nach verwendeter Polyurethanrezeptur die Verwendung aldehydfangender Substanzen zu Schaumstörungen führen kann und unter Umständen auch Auswirkungen auf den Wirkungsgrad der Aldehydabsorption haben kann.

Deshalb besteht bei der Bereitstellung von Polyurethanschäumen, immer noch Bedarf an weiteren Lösungen, welche eine Reduzierung der Aldehydemission ermöglichen, aber keine Einbußen in Bezug auf die Prozessfähigkeit aufweisen und keine negative Beeinflussung der Schaumstruktur, besonders der Zellstruktur, noch der Entformbarkeit bewirken. Konkrete Aufgabe der vorliegenden Erfindung war, vor diesem Hintergrund die Bereitstellung von Polyurethanschäumen, zu ermöglichen, welche reduzierte Aldehydemissionen aufweisen, wobei keine Einbußen in Bezug auf die Prozessfähigkeit und keine negative Beeinflussung der Schaumstruktur, besonders der Zellstruktur, noch der Entformbarkeit auftreten. Insbesondere sollte hierbei auch das Interesse von Kunden Berücksichtigung finden, Additive einsetzen zu können, welche besonders gute Lagerstabilitäten von mindestens 3 Monaten aufweisen, wobei diese Additive in dieser Zeit keine visuellen und wirkungsbezogenen Veränderungen erleiden.

Überraschenderweise konnte nun gefunden werden, dass, wenn die Umsetzung in Gegenwart von einer Komponente A, umfassend ein Polyhydrazid, ein Polysulfonylhydrazid und/oder -carbodihydrazid, insbesondere ein Polyhydrazid, durchgeführt wird, wobei die Kompenente A in Form einer Mischung C eingesetzt wird, diese weiterhin umfassend eine Komponente B, enthaltend ein Dispergiermittel, diese Aufgabe gelöst wird.

Gegenstand der Erfindung ist somit ein Verfahren zur Herstellung von Polyurethan-Schäumen durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren,
wobei die Umsetzung in Gegenwart von einer Komponente A, umfassend ein Polyhydrazid, ein Polysulfonylhydrazid und/oder -carbodihydrazid, insbesondere ein Polyhydrazid, durchgeführt wird, wobei die zuvor genannte Komponente A in Form einer Mischung C eingesetzt wird, wobei diese Mischung C weiterhin eine Komponente B umfasst, Komponente B umfassend ein Dispergiermittel aus der Gruppe von Phthalsäurealkylestern, Dicarbonsäurealkylester, Adipinsäurealkylestern, Sebacinsäurealkylestern, Dodekansäurealkylestern, Polyestern, Phosphatestern, Fettsäureestern, geradkettigen und modifizierten natürlichen Ölen oder Mineralölen, sulfonierten Ölen, ethoxylierten Ölen, epoxidierten Ölen, Fettsäuren, Sulfonamiden, Glykolen, Polyglykolen, 1,2,4-Benzoltricarbonsäurealkylester und/oder Lecithin, insbesondere Butyldiglykol, 1,2,4-Benzoltricarbonsäuretris(decyl)ester oder 1,2-Cyclohexandicarbonsäurediisononylester.

Der erfindungsgemäße Gegenstand ermöglicht die Bereitstellung von Polyurethanschäumen, welche reduzierte Aldehydemissionen aufweisen und bei denen keine Einbußen in Bezug auf die Prozessfähigkeit und keine negative Beeinflussung der Schaumstruktur, besonders der Zellstruktur, noch der Entformbarkeit auftreten. Die erfindungsgemäß eingesetzte Mischung C, umfassend die Komponenten A und B, weist eine besonders gute Lagerstabilität von über 3 Monaten auf, und erleidet bei längerer Lagerung keine visuellen und wirkungsbezogenen Veränderungen.

Gemäß einer besonders bevorzugten Ausführungsform der Erfindung umfasst die Kompenente A ein Polyhydrazid, vorzugsweise Oxalsäuredihydrazid, Malonsäuredihydrazid, Bernsteinsäuredihydrazid, Adipinsäuredihydrazid, Sebacinsäuredihydrazid, Dodekansäuredihydrazid, Isophtalsäuredihydrazid, Piperazin-N,N'-dihydrazid, m-Benzoldihydrazid und/oder p-Benzoldihydrazid, insbesondere Adipinsäuredihydrazid und/oder Carbodihydrazid. Adipinsäuredihydrazid ist am meisten bevorzugt und bewirkt besonders gute Ergebnisse im Sinne der Erfindung.

Gemäß einer weiteren bevorzugten Ausführungsform der Erfindung umfasst die Mischung C neben der Komponente A und der Komponente B weiterhin Polyethylenglykoltridecyletherphosphat, Phosphorsäureester, Organophosphate und/oder Polyether-(mono-)ole wie z.B. 2-Ethyl Hexanol EO-PO-Polyether.

Wenn das Mischungsverhältnis von Komponente A zu Komponente B 3 zu 1 bis 1 zu 3, bevorzugt 2 zu 1 bis 1 zu 2, weiter bevorzugt 1,5 zu 1 bis 1 zu 1,5, insbesondere 1,1 zu 1 bis 1 zu 1,1 beträgt, so liegt eine weitere bevorzugte Ausführungsform der Erfindung vor. Hiermit sind Gewichtsteile gemeint.

Wie bereits dargelegt, ermöglicht es der Erfindungsgegenstand, dass die Emission von Aldehyd zuverlässig minimiert werden kann. Ein weiterer besonderer Vorteil der vorliegenden Erfindung liegt aber auch darin, dass die im erfindungsgemäßen Verfahren eingesetzte Mischung C dem Anwender insofern zu einem wichtigen Vorteil verhilft, da diese Mischung sehr lagerstabil ist, d.h. weder optisch noch qualitativ einbüßt, und somit auch nach Lagerung über einen längeren Zeitraum die Emission von Aldehyd zuverlässig minimiert.

In diesem Zusammenhang hat es sich als besonders vorteilhaft erwiesen, wenn die Komponente A als gemahlenes Material vorliegt, das in der Komponente B dispergiert ist, was einer bevorzugten Ausführungsform entspricht. Unter Mahlen versteht man die Zerkleinerung von Feststoffen, insbesondere mittels oder in einer Mühle oder einem Mahlwerk. Als mögliches Instrument kann eine Kugelmühle verwendet werden, z.B. eine Planeten-Kugelmühle. Diese kommen überall dort zum Einsatz, wo höchste Ansprüche an die Feinheit gestellt werden. Die extrem hohen Fliehkräfte einer Planeten-Kugelmühle bewirken die Freisetzung sehr hoher Zerkleinerungsenergien, was in sehr kurzen Prozesszeiten resultiert. Das zugrundeliegende Zerkleinerungsprinzip basiert auf Prall beziehungsweise Reibung.

Eine Dispersion ist in der Verfahrenstechnik ein heterogenes Gemisch aus mindestens zwei Stoffen, die sich nicht oder kaum ineinander lösen oder chemisch miteinander verbinden. Dabei sind ein oder mehrere Stoffe (disperse Phase) fein verteilt in einem anderen kontinuierlichen Stoff (Dispergiermittel). Die einzelnen Phasen können deutlich voneinander abgegrenzt und in der Regel durch physikalische Methoden wieder voneinander getrennt werden (z. B. Filtrieren, Zentrifugieren).

Insgesamt hat es sich als vorteilhaft erwiesen, wenn die Partikelgröße des gemahlenen Materials oder der Dispersion von 0,5 bis 200 µm, vorzugsweise von 0,5 bis 60 µm beträgt und am bevorzugtesten von 0,5 bis 30 µm beträgt, welches einer bevorzugten Ausführungsform entspricht. Weiterhin hat es sich als vorteilhaft erwiesen, wenn das erfindungsgemäße Verfahren sich dadurch auszeichnet, dass die Mischung C in einem Massenanteil von zusammen 0,01 bis 20 Teilen, vorzugsweise von 0,05 bis 5 insbesondere von 0,1 bis 3 bezogen auf 100 Teile Polyolkomponente eingesetzt wird.

Insbesondere ist es bevorzugt, dass als Polyurethansystem ein Polyurethanschaum hergestellt wird. Ein Polyurethanhartschaum, ein Polyurethanweichschaum, ein viskoelastischer PU-Schaum, ein Polyurethan HR-Schaum, ein halbharter Polyurethanschaum, ein thermoverformbarer Polyurethanschaum oder ein PU-Integralschaum sind besonders bevorzugt.

Die erfindungsgemäß eingesetzten Verbindungen, deren Herstellung, die Verwendung der Verbindungen zur Herstellung der Polyurethan-Schäume selbst werden nachfolgend beispielhaft beschrieben.

Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-) Formeln verwendet, so können die angegebenen Indizes sowohl absolute Zahlen als auch Mittelwerte darstellen. Bei polymeren Verbindungen stellen die Indizes vorzugsweise Mittelwerte dar.

Die Herstellung der Polyurethansysteme kann grundsätzlich auf die übliche Weise und wie im Stand der Technik beschrieben erfolgen. Sie ist dem Fachmann wohlbekannt eine grundsätzliche Übersicht findet sich z. B. in G. Oertel, Polyurethane Handbook, 2nd Edition, Hanser/Gardner Publications Inc., Cincinnati, Ohio, 1994, p. 177-247. Bei der erfindungsgemäßen Herstellung der Polyurethansysteme werden die Mischungen C vorzugsweise in einem Massenanteil von 0,01 bis 20 Teilen, bevorzugt 0,05 bis 5 Teilen und besonders bevorzugt von 0,1 bis 3 Teilen bezogen auf 100 Teile Polyolkomponente eingesetzt.

Bei der Durchführung des erfindungsgemäßen Verfahrens zur Herstellung der PolyurethanSchäume kann es vorteilhaft sein, wenn außerdem Wasser, physikalische Treibmittel, Flammschutzmittel und/oder weitere Additive zugegeben werden.

Als Isocyanatkomponente können in dem erfindungsgemäßen Verfahren alle Isocyanate, insbesondere die an sich bekannten aliphatischen, cycloaliphatischen, araliphatischen und vorzugsweise aromatischen mehrwertigen Isocyanate eingesetzt werden. Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugte Isocyanate sind Mischungen von TDI und MDI. Besonders geeignet ist auch das als "pure MDI" bezeichnete zweikernige Produkt aus überwiegend 2,4'- und 4,4'-Isomerengemischen bzw. deren Prepolymeren. Besonders geeignet sind MDI-Prepolymere. Beispiele für besonders geeignete Isocyanate sind z.B. in EP 1712578, EP 1161474, WO 00/58383, US 2007/0072951, EP 1678232 und der WO 2005/085310 aufgeführt.

Als Polyolkomponente geeignete Polyole im Sinne dieser Erfindung sind vorzugsweise alle organischen Substanzen mit mehreren gegenüber Isocyanaten reaktiven Gruppen, sowie deren Zubereitungen einsetzbar. Bevorzugte Polyole sind alle zur Herstellung von Polyurethansystemen, insbesondere Polyurethanschaumstoffen üblicherweise verwendeten Polyetherpolyole und Polyesterpolyole. Die Polyole sind vorzugsweise keine Verbindungen, die mindestens einen 5- oder 6-gliedrigen Ring aufweisen, der aus ein oder zwei Sauerstoffatomen und Kohlenstoffatomen aufgebaut ist.

Polyetherpolyole können z. B. durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure sein können) mit mehrwertigen Alkoholen (meist Glycolen). Zudem können auf natürlichen Ölen basierende Polyether (natural oil based polyols, NOPs) eingesetzt werden. Diese Polyole werden aus natürlichen Ölen wie z.B. Soja- oder Palmöl gewonnen und können unmodifiziert oder modifiziert verwendet werden.

Eine weitere Klasse von Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1 erhalten werden.

Noch eine weitere Klasse von vorzugsweise einsetzbaren Polyolen stellen die sogenannten Füllstoffpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man kann z.B. unter anderem verwenden:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und >40 Gew.-%, bezogen auf das Polyol liegen kann, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole können diese z.B. alleine oder z.B. in Abmischung mit den oben genannten ungefüllten Polyolen eingesetzt werden.

Bevorzugt einsetzbare Polyole sind die sogenannten Zellöffnerpolyole. Diese sind Polyetherpolyole mit einem hohen Ethylenoxidanteil, und zwar vorzugsweise von mindestens 40 Gew.-%, insbesondere von 50 bis 100 Gew.-%, bezogen auf den Gehalt an Alkylenoxid.

Ein im Rahmen dieser Erfindung bevorzugtes Verhältnis von Isocyanatkomponente zu Polyolkomponete, ausgedrückt als Index, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete Katalysatoren, die in dem erfindungsgemäßen Verfahren verwendet werden können, sind vorzugsweise Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnsalze organsicher Carbonsäuren, Zinnverbindungen wie Dibutylzinndilaurat und Kaliumsalze wie Kaliumacetat. Vorzugsweise werden als weitere Katalysatoren solche eingesetzt, die keine organische Zinnverbindungen, insbesondere kein Dibutylzinndilaurat enthalten.

Geeignete Einsatzmengen dieser Katalysatoren im erfindungsgemäßen Verfahren richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte im erfindungsgemäßen Verfahren hängen davon ab, ob zusätzlich zum Wasser noch physikalische Treibmittel eingesetzt werden oder nicht. Bei rein Wasser-getriebenen Schäumen liegen die Werte typischerweise bei vorzugsweise 1 bis 20 pphp, werden zusätzlich andere Treibmittel eingesetzt, verringert sich die Einsatzmenge auf üblicherweise z.B. 0 oder z.B. 0,1 bis 5 pphp. Zur Erlangung hoher Schaumraumgewichte werden vorzugsweise weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, aber auch olefinische Fluorkohlenwasserstoffe wie HHO 1233zd oder HHO1336mzzZ, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Als Stabilisatoren können die im Stand der Technik genannten Substanzen verwendet werden. Vorteilhafterweise können die erfindungsgemäßen Zusammensetzungen ein oder mehrere Stabilisatoren enthalten. Dabei handelt es sich insbesondere um Kohlenstoffatome aufweisende Siliziumverbindungen, vorzugsweise ausgewählt aus den Polysiloxanen, Polydimethylsiloxanen, organomodifizierten Polysiloxanen, polyethermodifizierten Polysiloxanen und Polyether-Polysiloxan-Copolymeren.

Als ein oder mehrere Kohlenstoffatome aufweisende Siliziumverbindungen können die im Stand der Technik genannten Substanzen verwendet werden. Vorzugsweise werden solche Si-Verbindungen eingesetzt, die für den jeweiligen Schaumtypen besonders geeignet sind. Geeignete Siloxane sind beispielsweise in den folgenden Schriften beschrieben: EP 0839852, EP 1544235, DE 102004001408, WO 2005/118668, US 2007/0072951, DE 2533074, EP 1537159 EP 533202, US 3933695, EP 0780414, DE 4239054, DE 4229402, EP 867465. Die Herstellung der Si-Verbindungen kann wie im Stand der Technik beschrieben erfolgen. Geeignete Beispiele sind z. B. in US 4147847, EP 0493836 und US 4855379 beschrieben.

Insbesondere können organisch modifizierte Si-Verbindungen eingesetzt werden. Besonders bevorzugte, einsetzbare organisch modifizierte Si-Verbindungen sind z.B. solche gemäß nachfolgender Formel (IV)

Mₖ Dₘ D'ₙ Tₒ Qₚ (IV)

mit
- M: = [R²R¹₂SiO_{1/2}]
- D: = [R¹R¹SiO_{2/2}]
- D': = [R³R¹SiO_{2/2}]
- T: = [R¹SiO_{3/2}]
- Q: = [SiO_{4/2}]

k = 0 bis 22, bevorzugt 2 bis 10, besonders bevorzugt 2
m = 0 bis 400, bevorzugt 0 bis 200, besonders bevorzugt 2 bis 100
n = 0 bis 50, bevorzugt 0,5 bis 20, besonders bevorzugt 0,7 bis 9
o = 0 bis 10, bevorzugt 0 bis 5, insbesondere bevorzugt 0
p = 0 bis 10 bevorzugt 0 bis 5, insbesondere bevorzugt 0
R² = R¹ oder R³
R¹ = unabhängig voneinander Alkyl- oder Arylreste oder H, vorzugsweise Methyl, Ethyl, Propyl oder Phenyl, bevorzugt Methyl oder Phenyl
R³ = organische Modifikationen z.B. Polyether oder ein einwertiger Rest mit 1 bis 30 C-Atomen mit wenigstens einem Heteroatom ausgewählt aus der Gruppe N, S, O, P, F, Cl, Br

Bevorzugt sind R³ in Formel (IV) Reste aus der Gruppe,

-CH₂CH₂CH₂O[CH₂CH₂O]ₐ[CH₂CH(CH₃)O]_{b}[CHR⁴CHR⁴O]_{c}R⁵

-CH₂CH₂CH₂CN

-CH₂CH₂CF₃

-CH₂CH₂CH₂Cl

mit
R⁵ = Alkyl, Aryl, Urethan, Carboxyl, Silyl oder H, bevorzugt H, -Me, oder -C(O)Me
R⁴ = Alkyl, Aryl, die ggf. durch Sauerstoff unterbrochen sein können, insbesondere bevorzugt H, Me, Et oder Ph,
a = 0 bis 100, bevorzugt 0,5 bis 70, besonders bevorzugt 1 - 40
b = 0 bis 100, bevorzugt 0,5 bis 70, besonders bevorzugt 0 - 40
c = 0 bis 50, bevorzugt 0 bis 15, insbesondere bevorzugt 0
a + b + c > 3.

Insbesondere können unmodifizierte Si-Verbindungen eingesetzt werden.

Besonders bevorzugte, einsetzbare unmodifizierte Si-Verbindungen sind z.B. solche der nachfolgenden Formel (V)

M_{q} Dᵣ (V)

mit
M, D wie bei voriger Formel (IV) definiert, und
q = 2
r = 0 bis 50, bevorzugt 1 bis 40, besonders bevorzugt 2 bis 30.

Besonders bevorzugt können die oben genannten Si-Verbindungen, insbesondere der Formel (IV) und/oder (V) einzeln oder in Kombination miteinander eingesetzt werden. In Fall von Mischungen kann zusätzlich ein Kompatibilisator eingesetzt werden. Dieser kann ausgewählt sein aus der Gruppe aliphatischer oder aromatischer Kohlenwasserstoffe, besonders bevorzugt aliphatische Polyether oder Polyester.

Es kann vorteilhaft sein, wenn in den Siloxanverbindungen der Formel (IV) mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R2 in der Siloxanverbindung).

Vorzugsweise können von 0,00001 bis 20 Massenteile Siliziumverbindungen pro 100 Massenteile Polyolkomponenten eingesetzt werden.

Insbesondere der Einsatz der vorgenannten Siliziumverbindungen in Kombination mit den erfindungsgemäß einzusetzenden Mischungen C ermöglicht sehr gute Resultate im Hinblick auf die erfindungsgemäß angestrebten Polyurethane.

Neben oder an Stelle von Wasser und ggf. physikalischen Treibmitteln, können auch andere chemische Treibmittel, die mit Isocyanaten unter Gasentwicklung reagieren, wie beispielsweise Ameisensäure, Carbamate oder Carbonate in der erfindungsgemäßen Additivzusammensetzung vorhanden sein.

Geeignete optionale Flammschutzmittel im Sinne dervorliegenden Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Durch das erfindungsgemäße Verfahren können , Polyurethanschäume hergestellt werden, die besonders arm an Aldehydemissionen sind bei guter Verarbeitbarkeit.

Die Bezeichnung Polyurethan ist im Sinne der Erfindung insbesondere als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäße Herstellung von Polyurethanschaumstoffen kann nach allen dem Fachmann geläufigen Verfahren erfolgen, beispielsweise im Handmischverfahren oder bevorzugt mit Hilfe von Hochdruck- oder Niederdruck-Verschäumungsmaschinen. Das erfindungsgemäße Verfahren kann kontinuierlich oder diskontinuierlich durchgeführt werden. Eine diskontinuierliche Durchführung des Verfahrens ist bevorzugt bei der Herstellung von Formschäumen, Kühlschränken, Schuhsohlen oder Paneelen. Eine kontinuierliche Verfahrensführung ist bei der Herstellung von Dämmplatten, Metallverbundelementen, Blöcken oder bei Sprühverfahren bevorzugt.

In dem erfindungsgemäßen Verfahren können die erfindungsgemäß verwendeten Mischungen C vorzugsweise direkt vor oder aber auch erst während der Reaktion (zur Ausbildung der Urethanbindungen) zugemischt werden. Bevorzugt erfolgt die Zusammenführung/Zudosierung der Kombination in einem Mischkopf, sowie auch in einem Batchverfahren für fertige Polyolsysteme.

Ein weiterer Gegenstand der vorliegenden Erfindung ist ein Polyurethanschaum, hergestellt gemäß einem erfindungsgemäßen Verfahren wie zuvor beschrieben.

Die erfindungsgemäßen Polyurethan-Schäume können vorzugsweise 0,001 bis 20 Gew.-%, vorteilhafterweise 0,005 bis 5 Gew.-%, insbesondere 0,01 bis 3 Gew.-% bezogen auf die Gesamtzusammensetzung des Polyurethansystems, einer Gesamtmenge der Mischung C aufweisen.

Die erfindungsgemäßen Polyurethansysteme können vorzugsweise ein Polyurethanschaum, insbesondere z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum sein.

Die erfindungsgemäßen Polyurethansysteme, bevorzugt Polyurethanschäume, können z. B. als Kühlschrankisolierung, Dämmplatte, Sandwichelement, Rohrisolation, Sprühschaum, 1- & 1,5-Komponenten-Dosenschaum (ein 1,5-Komponenten-Dosenschaum ist ein Schaum der durch zerstören eines Behälters in der Dose erzeugt wird), Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber, Bindemittel oder Lackierung zur Herstellung entsprechender Produkte verwendet werden.

Ein weiterer Gegenstand der Erfindung ist eine Zusammensetzung zur Herstellung von Polyurethanschaum, umfassend wenigstens einen Urethan- und/oder Isocyanurat-Katalysator, wenigstens ein Treibmittel, wenigstens eine Isocyanatkomponente und wenigstens eine Polyolkomponente, wobei als Additiv eine Mischung C enthalten ist, Mischung C wie oben beschrieben. Insbesondere mit Blick auf die Mischung C wird vollumfänglich auf das bereits gesagte verwiesen, um Wiederholungen zu vermeiden.

Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung von Polyurethanschaum führt. Der Begriff der Zusammensetzung in diesem Sinne umfasst insbesondere das Gemisch (Mischung) wenigstens eines Urethan- und/oder Isocyanurat-Katalysators, wenigstens eines Treibmittels, wenigstens einer Isocyanatkomponente und einer Mischung C, wie oben beschrieben.

Eine bevorzugte erfindungsgemäße Zusammensetzung zur Herstellung von Polyurethanschaum kann Polyol z.B. in Mengen von 25 bis 75 Gew.-%, Wasser z.B. in Mengen von 1 bis 7 Gew.-%, Katalysator z.B. in Mengen von 0,05 bis 3 Gew.-%, physikalisches Treibmittel z.B. in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) z. B. in Mengen von 0,3 bis 5 Gew.-%, Isocyanat z.B. in Mengen von 20 bis 50 Gew.% und die erfindungsgemäß einzusetzende Mischung C z. B. in Mengen von 0,001 bis 20 Gew.-% (vorzugsweise 0,005 bis 5 Gew.-%), enthalten.

Bezüglich bevorzugter Ausführungsformen dieser vorgenannten Zusammensetzungen wird insbesondere mit Blick auf die Mischung C auf die vorangegangene Beschreibung verwiesen.

Ein weiterer Gegenstand der Erfindung ist ein Verfahren zur Erniedrigung der Aldehydgesamtemission, insbesondere Aldehydemissionen umfassend Formaldehyd und Acetaldehyd, aus Polyurethanschaumstoffen, durch Zugabe von Mischung C, (Mischung C wie zuvor beschrieben), zu dem Polyurethanschaumstoff, vorzugsweise in einer Menge von 0,001 bis 20 Gew.-%, vorteilhafterweise 0,005 bis 5 Gew.-%, insbesondere 0,01 bis 3 Gew.-%, bezogen auf das Gesamtgewicht des Polyurethanschaumstoffs, wobei die Zugabe vor und/oder während der Herstellung des Polyurethanschaumstoffs, erfolgen kann.

Ein weiterer Gegenstand der Erfindung ist ein Polyurethanschaumstoff enthaltend Mischung C, wie zuvor beschrieben, in einer Menge von vorzugsweise 0,001 bis 20 Gew.-%, vorteilhafterweise 0,005 bis 5 Gew.-%, insbesondere 0,01 bis 3 Gew.-% bezogen auf das Gesamtgewicht des Polyurethanschaumstoffs, insbesondere erhältlich durch Zugabe von Mischung C vor und/oder während der Herstellung des Polyurethanschaumstoffs.

Ein weiterer Gegenstand der Erfindung ist die Verwendung von Mischung C, wie zuvor beschrieben, zur Herstellung von Polyurethanschaumstoffen, die emissionsarm bezüglich Aldehyden sind, vorzugsweise umfassend Formaldehyd und Acetaldehyd. Ein weiterer Gegenstand der Erfindung ist die Verwendung von Mischung C, wie zuvor beschrieben, zur Reduzierung der Emissionen von Aldehyden, vorzugsweise umfassend Formaldehyd und Acetaldehyd, aus Polyurethanschaumstoffen, im Vergleich zu solchen Polyurethanschaumstoffen, die ansonsten gleich, aber ohne den Einsatz der Mischung C, hergestellt sind.

Ein weiterer Gegenstand der Erfindung ist die Verwendung einer Mischung C, insbesondere wie zuvor beschrieben, zur Reduzierung der Aldehydemissionen, insbesondere umfassend Formaldehyd und Acetaldehyd, von Polyurethanschaumstoffen.

In den nachfolgend aufgeführten Beispielen wird die vorliegende Erfindung beispielhaft beschrieben.

### Beispiele:

**Tabelle 1: Lösungen und Dispersionen**

| Additiv | Beschreibung |
|---|---|
| Lösung 1* | 10 % Adipinsäuredihydrazid (TNJ, China) in Wasser |
| Dispersion 1** | 50 % Adipinsäuredihydrazid dispergiert in 1,2,4-Benzoltricarbonsäuretris(decyl)ester |

| | |
|---|---|
| * Frisch angesetzte Lösung wurde eingesetzt. Um eine wässrige Lösung enthaltend 10% Adipinsäuredihydrazid herzustellen, musste die Lösung für ungefähr 30 min auf 40-45°C erwärmt werden. Selbst bei 60°C erhielt man allerdings keine 100%ige Löslichkeit der Aktivsubstanz. Lagert man diese Lösung bei Raumtemperatur war das Ausfallen eines Niederschlages zu beobachten. Deshalb wurde eine frisch angesetzte Lösung eingesetzt. ** Adipinsäuredihydrazid wurde im Verhältnis 1:1 mit 1,2,4-Benzoltricarbonsäuretris(decyl)ester gemischt in Anwesenheit von 0,5% Polyethylenglykoltridecyletherphosphat und in einer Dispermatkugelmühle bei 5000 Umdrehungen/min für ca. 1,5 Stunden geschert. | |

**Tabelle 2: Verwendete Rohstoffe für die Herstellung der Schäume**

| | |
|---|---|
| Polyol 1 | Polyetherol trifunktionell, MW 6000, Covestro AG |
| Polyol 2 | Polyetherol trifunktionell, MW 4500, Dow Chemicals |
| Vernetzer | Tegoamin DEOA rein (Diethanolamin 100%), Overlack GmbH |
| Katalysator 1 | DABCO NE 300 (N-[2-[2-(dimethylamino) ethoxy] ethyl]-N-methyl-1,3-propanediamine), Evonik Industries AG |
| Katalysator 2 | DABCO NE 1082 (1,3-Bis[3-(dimethylamino)propyl]harnstoff, N'-[3-(Dimethylamino)propyl]-N,N-dimethylpropan-1,3-diamin, Evonik Industries AG |
| Silikonstabilisator | TEGOSTAB B 8715 LF 2, Evonik Industries AG |
| Isocyanat | Methylendiisocyanat, Suprasec 2447, NCO=32,7 %, Huntsman |

### Beispiel 1:

### Herstellung der Dispersionen

Adipinsäuredihydrazid wurde im Verhältnis 1:1 mit 1,2,4-Benzoltricarbonsäuretris(decyl)ester gemischt in Anwesenheit von 0,5% Polyethylenglykoltridecyletherphosphat und in einer Dispermatkugelmühle (Planetenkugelmühle) (Hersteller: Retsch, Bezeichnung: PM 100) bei 5000 Umdrehungen/min für ca. 1,5 Stunden geschert.

### Herstellung von Polyurethan-Schäumen

Die Durchführung der Verschäumungen erfolgte im Handmischverfahren. Dazu wurden Polyol, Vernetzer, Katalysator, Additiv, Wasser und Silikonstabilisator in einen Becher eingewogen, vgl. hierzu Tabelle 3, und mit einem Flügelrührer 60s bei 1000 Upm vorgemischt. Anschließend wurde das Isocyanat zugegeben und bei einer Rührerdrehzahl von 2500 Upm 7s eingerührt. Das Reaktionsgemisch wurde in eine auf 57°C temperierte Kastenform (Abmessungen 40x40x10cm) eingefüllt und verschlossen. Der fertige Schaum wurde nach 3,5 Minuten entformt. Die verwendeten Einsatzmengen und Edukte können Tabelle 3 entnommen werden.

Die nach dem oben beschriebenen Verfahren hergestellten Formschäume wurden dann in Anlehnung an die VDA 275 (VDA 275 "Formteile für den Fahrzeuginnenraum - Bestimmung der Formaldehydabgabe". Messverfahren nach der modifizierten Flaschen-Methode; Quelle: VDA 275, 07/1994, www.vda.de) auf ihren Formaldehyd- und Acetaldehydgehalt analysiert.

### Spiken der Schäume

Da die verwendeten Einsatzstoffe der Polyurethanformulierung nur vergleichsweise niedrige Acetaldehydemissionen nach der Verschäumung liefern, werden diese mit 30 ppm Acetaldehyd versetzt, um einen erhöhten Startwert messen zu können und aussagekräftige Daten über die Erniedrigung der Aldehydemissionen zu bekommen und damit die Wirksamkeit der Aktivsubstanz aufzuzeigen. Als Referenzwerte für Form- und Acetaldehyd dienen im Weiteren die Ergebnisse aus dem Schaum V1 in Tabelle 3.

### Messprinzip

Bei der Methode wurden Probekörper einer bestimmten Masse und Abmessung über destilliertem Wasser in einer geschlossenen 1I-Glasflasche befestigt und bei konstanter Temperatur über eine definierte Zeit gelagert. Danach kühlte man die Flaschen ab und bestimmte im destillierten Wasser den absorbierten Formaldehyd und Acetaldehyd. Die ermittelte Formaldehyd- und Acetaldehydmenge wurde auf trockenes Formteilgewicht bezogen (mg/kg).

### Analytik

### Prüfkörper: Probenvorbereitung, Probenahme und Probekörperabmessungen

Nach dem Entformen der Schäume wurden diese 24 Stunden bei 21°C und ca. 50% relativer Luftfeuchte gelagert. Es wurden dann Probekörper gleichmäßig verteilt über die Breite des (abgekühlten) Formteils an geeigneten und repräsentativen Stellen entnommen. Danach wurden die Schäume in eine Aluminium-Folie eingeschlagen und in einem Polyethylenbeutel versiegelt.

Die Größe der Probekörper betrug jeweils 100x40x40mm Dicke (ca. 9g). Pro Formteil wurden 3 Probekörper für die Aldehydbestimmung entnommen.

### Durchführung der Prüfung: Formaldehyd-/Acetaldehydabgabe

Direkt nach Erhalt der versiegelten Probekörper wurden diese der Direktbestimmung zugeführt. Die Proben wurden vor Beginn der Analyse auf der Analysenwaage auf 0,001g genau ausgewogen. In die verwendeten Glasflaschen wurden jeweils 50 ml destilliertes Wasser pipettiert. Nach Anbringung der Probekörper in der Glasflasche wurde das Gefäß geschlossen und über 3 Stunden im Wärmeschrank bei einer konstanten Temperatur von 60°C verwahrt. Nach Ablauf der Prüfzeit wurden die Gefäße aus dem Wärmeschrank genommen. Nach 60 Minuten Standzeit bei Raumtemperatur wurden die Probekörper aus der Prüfflasche entfernt. Anschließend erfolgte die Derivatisierung nach der DNPH-Methode (Dinitrophenylhydrazin). Dazu werden 900 µl der Wasserphase mit 100µl einer DNPH Lösung versetzt. Die DNPH-Lösung ist wie folgt hergestellt: 50mg DNPH in 40mL MeCN (Acetonitril) werden mit 250 µL HCl (1:10 verd.) angesäuert und auf 50 mL mit MeCN aufgefüllt. Nach der erfolgten Derivatisierung wird eine Probe mittels HPLC analysiert. Es erfolgt eine Auftrennung in die einzelnen Aldehyd-Homologen.

### Geräteparameter HPLC

Es wurde das folgende Gerät für die Analyse verwendet:
Agilent Technologies 1260
Chromatographiesäule: Phenomenex Luna 250*4,6mm C18, 5µ Teilchengröße
Laufmittel: Wasser Acetonitril Gradient
Detektion: UV 365 nm

**Tabelle 3: Formulierung zur Herstellung der Formteile und Ergebnisse der Form- und Acetaldehydmessungen, sowie Schaumeigenschaften wie Härte und Prozessfähigkeit**

| | V1 | V2 | E1 | E2 |
|---|---|---|---|---|
| Polyol A | 100 | 100 | 100 | 100 |
| Polyol B | 1,3 | 1,3 | 1,3 | 1,3 |
| Vernetzer | 0,59 | 0,59 | 0,59 | 0,59 |
| Wasser, Zugabe | 3,51 | 0 | 3,51 | 3,51 |
| Wasser, Gesamt | 3,51 | 3,51 | 3,51 | 3,51 |
| Katalysator 1 | 0,2 | 0,2 | 0,2 | 0,2 |
| Katalysator 2 | 0,8 | 0,8 | 0,8 | 0,8 |
| Silikonstabilisator | 1 | 1 | 1 | 1 |
| Isocyanat, Index 95 | 56,9 | 55,8 | 55,8 | 55,8 |
| Lösung 1 | ----- | 3,90 | ------ | ----- |
| Dispersion 1 | ----- | ----- | 0,78 | 1,00 |
| Gehalt Aktivsubstanz [pphp] | 0 | 0,39 | 0,39 | 0,50 |
| Formaldehydemissionen, ppm (VDA 275, mod.) | 0,77 | 0,15 | 0,16 | 0,08 |
| Acetaldehydemissionen, ppm (VDA 275, mod.) | 0,68 | 0,56 | 0,57 | 0,31 |
| Prozessfähigkeit | OK | OK | OK | OK |
| Zellenanzahl [Zellen/cm] | 14 | 14 | 14 | 14 |

Die Mengenangaben der Rohstoffe sind in Gramm.

### Beschreibung der Ergebnisse:

Setzte man die Dispersion 1 in der obengenannten Schaumformulierung aus Tabelle 3 ein, so zeigte sich, dass bei gleichem Aktivsubstanzgehalt eine vergleichbar gute Wirkung im Schaum im Bezug auf die Erniedrigung der Formaldehyd- und Acetaldehydemissionen erreicht werden kann, sowohl mit der wässrigen Lösung 1 (V2), sowie mit der Dispersion 1 (E1). Bei beiden Darreichungsformen ist die Prozessfähigkeit im Schaum sehr gut. Es gibt keine negative Beeinflussung der Schaumstruktur - besonders der Zellstruktur, noch der Entformbarkeit. Erhöhte man nun die Aktivsubstanzkonzentration im Schaum der Dispersion 1 (E2), wurden sogar noch niedrigere Werte für Formaldehyd und Acetaldehyd gemessen, bei gleichbleibend guten Prozesseigenschaften.

Der Einsatz der wässrigen Lösung 1 (V2) erwies sich allerdings als extrem nachteilig, was die Handhabung, Reproduzierbarkeit und Lagerstabilität betrifft.

Um eine wässrige Lösung enthaltend 10% Adipinsäuredihydrazid herzustellen, musste die Lösung für ungefähr 30 min auf 40-45°C erwärmt werden. Aber selbst bei 60°C erhielt man keine 100%ige Löslichkeit der Aktivsubstanz. Lagerte man diese Lösung bei Raumtemperatur war ein Ausfallen eines Niederschlages zu beobachten, spätestens nach ca.10 Tagen. Bei dem Versuch das Ausfallen des Niederschlages zu minimieren, z.B. durch einen geringeren Aktivstoffgehalt (höherer Wasseranteil), bei gleicher Vorgehensweise, blieb die Beobachtung bestehen, dass sich nach spätestens ca. 10 Tagen ein weißer feinkristalliner Niederschlag bildete. Das Adipinsäuredihydrazid erwies sich in wässriger Lösung also als überhaupt nicht lagerstabil, und es konnten somit keine reproduzierbaren Ergebnisse erzielt werden, es sei denn die wässrige Lösung wurde jeweils ganz frisch zubereitet und sofort verwendet.

Davon abgesehen wurden die enthaltenen Wassermengen in diesem weiterführenden Versuch mit 0,99 Teilen bei Einsatz der wässrigen Lösung im Produkt zu groß, so dass die in der oben beschriebenen Formulierung in Tabelle 3 verwendeten Wassermengen (siehe Wasser, Gesamt 3,51 Teile) nicht eingehalten werden können. Denn somit würden über den Aldehydfänger so große Wassermengen in das System eingebracht, dass die angestrebte Schaumdichte unterschritten wird und dies auch wiederum zu Instabilität führt.

Zudem gibt es keine Freiheit ein solches Produkt Kunden weiterzugeben, die sehr geringe Wassermengen verwenden, als Beispiel seien hier Systeme für Lenkräder aus mikrozellularen Polyurethananwendungen genannt, die üblicherweise Wassergehalte von kleiner oder max. 1% enthalten. Um dieses Thema zu umgehen, wurde die Konzentration des Wirkstoffgehaltes erhöht, was zur Folge hatte, dass das Ausfallen des feinkristallinen Niederschlages noch gravierender war und noch schneller eintritt. Die Lagerstabilität und die Reproduzierbarkeit waren also noch viel mangelhafter.

Dagegen erwies sich die erfindungsgemäße Dispersion 1 als überaus lagerstabil, zeigte auch nach Lagerung keine visuellen und wirkungsbezogenen Veränderungen, sondern führte durchgehend zu besonders reproduzierbaren Ergebnissen.

## Patentansprüche

1. Verfahren zur Herstellung von Polyurethanschaum durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, **dadurch gekennzeichnet, dass** die Umsetzung in Gegenwart von einer Komponente A, umfassend ein Polyhydrazid, ein Polysulfonylhydrazid und/oder -carbodihydrazid, insbesondere ein Polyhydrazid, durchgeführt wird, wobei die Komponente A in Form einer Mischung C eingesetzt wird, diese weiterhin umfassend eine Komponente B, umfassend ein Dispergiermittel aus der Gruppe von Phthalsäurealkylestern, Dicarbonsäurealkylestern, Adipinsäurealkylestern, Sebacinsäurealkylestern, Dodekansäurealkylestern, Polyestern, Phosphatestern, Fettsäureestern, geradkettigen und modifizierten natürlichen Ölen oder Mineralölen, sulfonierten Ölen, ethoxylierten Ölen, epoxidierten Ölen, Fettsäuren, Sulfonamiden, Glykolen, Polyglykolen, 1,2,4-Benzoltricarbonsäurealkylester und/oder Lecithin, insbesondere Butyldiglykol, 1,2,4-Benzol-tricarbonsäuretris(decyl)ester oder 1,2-Cyclohexandicarbonsäurediisononylester.

2. Verfahren nach Anspruch 1, **dadurch gekennzeichnet, dass** Komponente A ein Polyhydrazid, vorzugsweise Oxalsäuredihydrazid, Malonsäuredihydrazid, Bernsteinsäuredihydrazid, Adipinsäuredihydrazid, Sebacinsäuredihydrazid, Dodekansäuredihydrazid, Isophtalsäuredihydrazid, Piperazin-N,N'-dihydrazid, m-Benzoldihydrazid und/oder p-Benzoldihydrazid, insbesondere Adipinsäuredihydrazid und/oder Carbodihydrazid umfasst.

3. Verfahren nach Anspruch 1 oder 2, **dadurch gekennzeichnet, dass** die Mischung C weiterhin Polyethylenglykoltridecyletherphosphat, Phosphorsäureester, Organophosphate und/oder Polyether-(mono-)ole wie vorzugsweiser 2-Ethyl-Hexanol- EO-PO-Polyether umfasst.

4. Verfahren gemäß einem der vorigen Ansprüche, **dadurch gekennzeichnet, dass** das Mischungsverhältnis von Komponente A zu Komponente B 3 zu 1 bis 1 zu 3, bevorzugt 2 zu 1 bis 1 zu 2, weiter bevorzugt 1,5 zu 1 bis 1 zu 1,5, insbesondere 1,1 zu 1 bis 1 zu 1,1 beträgt.

5. Verfahren gemäß einem der vorigen Ansprüche, **dadurch gekennzeichnet, dass** die Komponente A als gemahlenes Material vorliegt, das in der Komponente B dispergiert ist.

6. Verfahren gemäß Anspruch 5, **dadurch gekennzeichnet, dass** die Partikelgröße des gemahlenen Materials oder der Dispersion von 0,01 bis 200 µm, vorzugsweise von 0,5 bis 60 µm beträgt und am bevorzugtesten von 0,1 bis 30 µm beträgt.

7. Verfahren nach mindestens einem der vorangegangenen Ansprüche, **dadurch gekennzeichnet, dass** die Mischung C in einem Massenanteil von zusammen 0,01 bis 20 Teilen, vorzugsweise von 0,05 bis 5 insbesondere von 0,1 bis 3 bezogen auf 100 Teile Polyolkomponente eingesetzt wird.

8. Verfahren nach mindestens einem der vorangegangenen Ansprüche, **dadurch gekennzeichnet, dass** als Polyurethanschaum ein Polyurethanhartschaum, ein Polyurethanweichschaum, ein viskoelastischer PU-Schaum, ein Polyurethan HR-Schaum, ein halbharter Polyurethanschaum, ein thermoverformbarer Polyurethanschaum oder ein PU-Integralschaum, bevorzugt ein Polyurethan HR-Schaum, hergestellt wird.

9. Polyurethanschaum, hergestellt gemäß einem Verfahren nach einem der Ansprüche 1 bis 8.

10. Polyurethanschaum nach Anspruch 9, **dadurch gekennzeichnet, dass** er von 0,001 bis 20 Gew.-%, vorzugsweise 0,005 bis 5 Gew.-%, insbesondere 0,01 bis 3 Gew.-% an Mischung C aufweist, Mischung C wie in vorigen Ansprüchen definiert.

11. Polyurethanschaum nach einem der Ansprüche 9 oder 10, **dadurch gekennzeichnet, dass** es ein Polyurethanhartschaum, ein Polyurethanweichschaum, ein viskoelastischer PU-Schaum, ein Polyurethan HR-Schaum, ein halbharter Polyurethanschaum, ein thermoverformbarer Polyurethanschaum oder ein PU-Integralschaum, bevorzugt ein Polyurethan HR-Schaum ist.

12. Verwendung von Polyurethanschaum gemäß zumindest einem der Ansprüche 9 bis 11 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsohle, Teppichrückseitenschaum, Filterschaum, Dichtschaum, Dichtmittel und Kleber, Beschichtung oder zur Herstellung entsprechender Produkte.

13. Verfahren zur Erniedrigung der Aldehydgesamtemission, insbesondere Aldehydemissionen umfassend Formaldehyd und Acetaldehyd, aus Polyurethanschaumstoffen, durch Zugabe von Mischung C, wie in einem der vorigen Ansprüche angegeben, zu dem Polyurethanschaumstoff, vorzugsweise in einer Menge von 0,001 bis 20 Gew.-%, vorteilhafterweise 0,005 bis 5 Gew.-%, insbesondere 0,01 bis 3 Gew.-%, bezogen auf das Gesamtgewicht des Polyurethanschaumstoffs, wobei die Zugabe vor und/oder während der Herstellung des Polyurethanschaumstoffs, erfolgen kann.

14. Verwendung einer Mischung C, wie in einem der vorigen Ansprüche angegeben, zur Herstellung von Polyurethanschaumstoffen, die emissionsarm bezüglich Aldehyden sind, insbesondere umfassend Formaldehyd und Acetaldehyd.

15. Verwendung einer Mischung C, wie in einem der vorigen Ansprüche angegeben, zur Reduzierung der Aldehydemissionen, insbesondere umfassend Formaldehyd und Acetaldehyd, von Polyurethanschaumstoffen.

## Claims

1. Process for producing polyurethane foam by reacting at least one polyol component with at least one isocyanate component in the presence of one or more catalysts which catalyse isocyanate-polyol and/or isocyanate-water and/or isocyanate trimerization reactions, **characterized in that** the reaction is performed in the presence of a component A comprising a polyhydrazide, a polysulfonyl hydrazide and/or carbodihydrazide, in particular a polyhydrazide, wherein the component A is employed in the form of a mixture C which further comprises a component B comprising a dispersion medium from the group of alkyl phthalates, alkyl dicarboxylates, alkyl adipates, alkyl sebacates, alkyl dodecanoates, polyesters, phosphate esters, fatty acid esters, straight-chain and modified natural oils or mineral oils, sulfonated oils, ethoxylated oils, epoxidized oils, fatty acids, sulfonamides, glycols, polyglycols, alkyl 1,2,4-benzenetricarboxylates and/or lecithin, in particular butyl diglycol, tris(decyl) 1,2,4-benzenetricarboxylate or diisononyl 1,2-cyclohexanedicarboxylate.

2. Process according to Claim 1, **characterized in that** component A comprises a polyhydrazide, preferably oxalic dihydrazide, malonic dihydrazide, succinic dihydrazide, adipic dihydrazide, sebacic dihydrazide, dodecanoic dihydrazide, isophthalic dihydrazide, piperazine-N,N'-dihydrazide, m-benzenedihydrazide and/or p-benzenedihydrazide, in particular adipic dihydrazide and/or carbodihydrazide.

3. Process according to Claim 1 or 2, **characterized in that** the mixture C further comprises polyethylene glycol tridecyl ether phosphate, phosphate esters, organophosphates and/or polyether (mono)ols such as preferably 2-ethylhexanol EO-PO polyether.

4. Process according to any of the preceding claims, **characterized in that** the mixing ratio of component A to component B is 3:1 to 1:3, preferably 2:1 to 1:2, more preferably 1.5:1 to 1:1.5, in particular 1.1:1 to 1:1.1.

5. Process according to any of the preceding claims, **characterized in that** the component A is in the form of a ground material dispersed in the component B.

6. Process according to Claim 5, **characterized in that** the particle size of the ground material or of the dispersion is from 0.01 to 200 µm, preferably from 0.5 to 60 µm and most preferably from 0.1 to 30 µm.

7. Process according to at least one of the preceding claims, **characterized in that** the mixture C is employed in a mass fraction of altogether 0.01 to 20 parts, preferably of 0.05 to 5 parts, in particular of 0.1 to 3 parts, based on 100 parts of polyol component.

8. Process according to at least one of the preceding claims, **characterized in that** the polyurethane foam produced is a rigid polyurethane foam, a flexible polyurethane foam, a viscoelastic PU foam, an HR polyurethane foam, a semi-rigid polyurethane foam, a thermoformable polyurethane foam or a PU integral foam, preferably an HR polyurethane foam.

9. Polyurethane foam produced by a process according to any of Claims 1 to 8.

10. Polyurethane foam according to Claim 9, **characterized in that** it comprises from 0.001% to 20% by weight, preferably 0.005% to 5% by weight, in particular 0.01% to 3% by weight, of mixture C, where mixture C is as defined in the preceding claims.

11. Polyurethane foam according to either of Claims 9 or 10, **characterized in that** it is a rigid polyurethane foam, a flexible polyurethane foam, a viscoelastic PU foam, an HR polyurethane foam, a semi-rigid polyurethane foam, a thermoformable polyurethane foam or a PU integral foam, preferably an HR polyurethane foam.

12. Use of polyurethane foam according to at least one of Claims 9 to 11 as refrigerator insulation, insulation panel, sandwich element, pipe insulation, spray foam, 1- and 1.5-component can foam, imitation wood, modelling foam, packaging foam, mattress, furniture cushioning, automotive seat cushioning, headrest, instrument panel, automotive interior trim, automotive headlining, sound absorption material, steering wheel, shoe sole, carpet backing foam, filter foam, sealing foam, sealant and adhesive or coating or for producing corresponding products.

13. Process for reducing the total aldehyde emission, in particular aldehyde emissions comprising formaldehyde and acetaldehyde, from polyurethane foams, by addition of mixture C, as stated in any of the preceding claims, to the polyurethane foam, preferably in an amount of 0.001% to 20% by weight, advantageously 0.005% to 5% by weight, in particular 0.01% to 3% by weight, based on the total weight of the polyurethane foam, wherein the addition may be effected before and/or during production of the polyurethane foam.

14. Use of a mixture C, as stated in any of the preceding claims, for producing polyurethane foams that have low emissions with regard to aldehydes, in particular comprising formaldehyde and acetaldehyde.

15. Use of a mixture C, as stated in any of the preceding claims, for reducing the aldehyde emissions, in particular comprising formaldehyde and acetaldehyde, from polyurethane foams.

## Revendications

1. Procédé destiné à la fabrication de mousse de polyuréthane par mise en réaction d'au moins un composant polyol avec au moins un composant isocyanate en présence d'un ou plusieurs catalyseurs qui catalysent les réactions isocyanate-polyol et/ou isocyanate-eau et/ou la trimérisation d'isocyanate, **caractérisé en ce que** la réaction est effectuée en présence d'un composant A comprenant un polyhydrazide, un polysulfonylhydrazide et/ou un carbodihydrazide, en particulier un polyhydrazide, le composant A étant utilisé sous la forme d'un mélange C, qui comprend en outre un composant B comprenant un dispersant du groupe des esters alkyliques d'acide phtalique, des esters alkyliques d'acide dicarboxylique, des esters alkyliques d'acide adipique, des esters alkyliques d'acide sébacique, des esters alkyliques d'acide dodécanoïque, des polyesters, des esters de phosphate, des esters d'acides gras, des huiles naturelles ou minérales à chaîne droite et modifiées, des huiles sulfonées, des huiles éthoxylées, des huiles époxydées, des acides gras, des sulfamides, des glycols, des polyglycols, des esters alkyliques d'acide 1,2,4-benzènetricarboxylique et/ou de la lécithine, en particulier du butyldiglycol, du tris(décyl)ester d'acide 1,2,4-benzènetricarboxylique ou de l'ester diisononylique d'acide 1,2-cyclohexanedicarboxylique.

2. Procédé selon la revendication 1, **caractérisé en ce que** le composant A est un polyhydrazide, préférablement le dihydrazide d'acide oxalique, le dihydrazide d'acide malonique, le dihydrazide d'acide succinique, le dihydrazide d'acide adipique, le dihydrazide d'acide sébacique, le dihydrazide d'acide dodécanoïque, le dihydrazide d'acide isophtalique, le pipérazine-N,N'-dihydrazide, le m-benzène dihydrazide et/ou le p-benzène dihydrazide, en particulier le dihydrazide d'acide adipique et/ou le carbodihydrazide.

3. Procédé selon la revendication 1 ou 2, **caractérisé en ce que** le mélange C comprend en outre du phosphate de tridécyléther de polyéthylène glycol, des esters d'acide phosphorique, des organophosphates et/ou des polyéther-(mono)ols tels que, préférablement, le 2-éthyl-hexanol-EO-PO-polyéther.

4. Procédé selon l'une quelconque des revendications précédentes, **caractérisé en ce que** le rapport de mélange du composant A sur le composant B est de 3 à 1 jusqu'à 1 à 3, préférablement de 2 à 1 jusqu'à 1 à 2, plus préférablement de 1,5 à 1 jusqu'à 1 à 1,5, en particulier de 1,1 à 1 jusqu'à 1 à 1,1.

5. Procédé selon l'une quelconque des revendications précédentes, **caractérisé en ce que** le composant A est présent sous forme de matériau broyé qui est dispersé dans le composant B.

6. Procédé selon la revendication 5, **caractérisé en ce que** la taille des particules du matériau broyé ou de la dispersion est de 0,01 à 200 µm, préférablement de 0,5 à 60 µm, et le plus préférablement, de 0,1 à 30 µm.

7. Procédé selon au moins l'une quelconque des revendications précédentes, **caractérisé en ce que** le mélange C est utilisé en une fraction massique au total de 0,01 à 20 parties, préférablement de 0,05 à 5, en particulier de 0,1 à 3 par rapport à 100 parties de composant polyol.

8. Procédé selon au moins l'une quelconque des revendications précédentes, **caractérisé en ce que** l'on fabrique comme mousse de polyuréthane, une mousse de polyuréthane rigide, une mousse de polyuréthane flexible, une mousse de PU viscoélastique, une mousse HR polyuréthane, une mousse de polyuréthane semi-rigide, une mousse de polyuréthane thermoformable ou une mousse intégrale de PU, préférablement une mousse HR polyuréthane.

9. Mousse de polyuréthane fabriquée selon un procédé selon l'une des revendications 1 à 8.

10. Mousse de polyuréthane selon la revendication 9, **caractérisée en ce qu'**elle présente de 0,001 à 20 % en poids, préférablement de 0,005 à 5 % en poids, en particulier de 0,01 à 3 % en poids de mélange C, le mélange C étant tel que défini dans les revendications précédentes

11. Mousse de polyuréthane selon au moins l'une des revendications 9 ou 10, **caractérisée en ce qu'**il s'agit d'une mousse de polyuréthane rigide, d'une mousse de polyuréthane flexible, d'une mousse de PU viscoélastique, d'une mousse HR de polyuréthane, d'une mousse de polyuréthane semi-rigide, d'une mousse de polyuréthane thermoformable ou d'une mousse intégrale de PU, préférablement d'une mousse HR de polyuréthane.

12. Utilisation d'une mousse de polyuréthane selon au moins l'une des revendications 9 à 11 comme isolation de réfrigérateur, plaque d'isolation, élément sandwich, isolation de tuyaux, mousse à pulvériser, mousse pistolable à 1 et 1,5 composant, imitation du bois, mousse pour modélisation, mousse d'emballage, matelas, rembourrage de meubles, rembourrage de siège d'automobile, appuie-tête, tableau de bord, habillage interne d'automobile, garniture de toit d'automobile, matériau d'absorption du bruit, volant, semelle de chaussure, mousse pour face arrière de tapis, mousse de filtre, mousse d'étanchéité, agent d'étanchéité et adhésif, revêtement ou pour la fabrication de produits correspondants.

13. Procédé destiné à réduire l'émission totale d'aldéhydes, en particulier d'émissions d'aldéhydes comprenant du formaldéhyde et de l'acétaldéhyde, de mousses de polyuréthane, par ajout du mélange C, en particulier tel que spécifié dans l'une quelconque des revendications précédentes, à la mousse de polyuréthane, préférablement en une quantité de 0,001 à 20 % en poids, avantageusement de 0,005 à 5 % en poids, en particulier de 0,01 à 3 % en poids, par rapport au poids total de la mousse de polyuréthane, l'ajout pouvant être effectué avant et/ou pendant la fabrication de la mousse de polyuréthane.

14. Utilisation d'un mélange C, comme indiqué dans l'une quelconque des revendications précédentes pour la fabrication de mousses de polyuréthane qui sont à faible émission d'aldéhydes, comprenant notamment du formaldéhyde et de l'acétaldéhyde.

15. Utilisation d'un mélange C, comme indiqué dans l'une quelconque des revendications précédentes, pour réduire les émissions d'aldéhydes, comprenant en particulier du formaldéhyde et de l'acétaldéhyde, de mousses de polyuréthane.
